Europäisches Patentamt

**European Patent Office**    (11) Numéro de publication:    **0 069 028**
                                                            **A1**
Office européen des brevets

(12)                    DEMANDE DE BREVET EUROPEEN

(21) Numéro de dépôt: **82420067.9**    (51) Int. Cl.³: **G 05 D 23/19, F 23 N 1/00**

(22) Date de dépôt: **27.05.82**

(30) Priorité: **29.05.81 FR 8111018**    (71) Demandeur: **SOCIETE LYONNAISE DES APPLICATIONS CATALYTIQUES, 105-121, avenue du 8 mai 1945, F-69140 Rillieux La Pape Rhône (FR)**

(43) Date de publication de la demande: **05.01.83 Bulletin 83/1**    (72) Inventeur: **Lacroix, Alain, 56, rue Henri Gorjus, Lyon 4ème Rhône (FR)**

(84) Etats contractants désignés: **AT BE CH DE GB IT LI LU NL SE**    (74) Mandataire: **Maureau, Philippe, Cabinet Germain & Maureau Le Britannia - Tour C 20, bld Eugène Déruelle, F-69003 Lyon (FR)**

(54) Procédé de régulation d'une installation de chauffage et dispositif pour sa mise en oeuvre.

(57) Ce procédé consiste à utiliser, à partir d'un seuil inférieur de température, une marche modulante, c'est-à-dire à fournir une puissance moyenne qui décroît au fur et à mesure que la température augmente, à stopper le chauffage lorsque la température atteint une valeur prédéterminée, et à ne réalimenter l'installation que lorsque la température réatteint la valeur inférieure de la plage correspondant à la marche modulante.

EP 0 069 028 A1

1

"Procédé de régulation d'une installation de chauffage et dispositif pour sa mise en oeuvre"

La présente invention a pour objet un procédé de régulation d'une installation de chauffage et un dispositif pour sa mise en oeuvre.

Dans le domaine du chauffage électrique intégré, il est connu d'utiliser des systèmes de régulation de type modulant, c'est-à-dire permettant une variation de puissance des convecteurs en fonction de la température, en jouant sur le temps d'alimentation des convecteurs.

En pratique, la puissance moyenne apparente fournie par les convecteurs diminue au fur et à mesure que la température augmente. Ceci présente l'avantage d'un plus grand confort pour l'utilisateur, que lorsque les convecteurs fournissent, de façon discontinue, une puissance qui apparaît soit plus élevée, soit nulle.

L'inconvénient de ce type de régulation est que les convecteurs sont réalimentés dès que la température atteint à la baisse la valeur de consigne, même si cette baisse de température correspond à un phénomène extérieur temporaire tel qu'un passage nuageux, ce qui ne constitue pas une solution économique.

En ce qui concerne les chauffages aux gaz, il est connu d'utiliser des systèmes de régulation par tout ou rien, ou encore des systèmes de régulation pneumatique, assurant un débit de gaz variant de façon proportionnelle à la température sous l'action d'un système de dilatation.

La régulation d'une installation de chauffage comportant des panneaux catalytiques, pose un problème particulier, qui exclut pratiquement leur utilisation pour le chauffage de locaux industriels ou de serres par exemple.

En effet, il n'est pas possible de diminuer le débit de gaz jusqu'à de faibles valeurs tout en maintenant des conditions de réaction satisfaisantes. En outre, le nombre de périodes d'allumage d'un appareil de chauffage à catalyse doit être aussi réduit que possible, puisque celles-ci nécessitent une suralimentation en gaz correspondant à une production d'inbrûlés sensiblement supérieure à celle correspondant au régime normal de fonctionnement.

La présente invention vise à fournir un procédé de régulation d'un appareil ou d'une installation de chauffage, limitant le nombre de périodes de fonctionnement tout en faisant varier la puissance qui est fournie à l'installation.

A cet effet, ce procédé consiste à utiliser, à partir d'un seuil inférieur de température, une marche modulante, c'est-à-dire à fournir une puissance moyenne qui décroît au fur et à mesure que la température augmente, à stopper le chauffage lorsque la température atteint une valeur prédéterminée, et à ne réalimenter l'installation que lorsque la température réatteint la valeur inférieure de la plage correspondant à la marche modulante.

Cet agencement est intéressant d'un point de vue économique, car il n'est généralement pas nécessaire, lorsqu'on a dépassé une certaine température, de remettre instantanément en route le chauffage, puisque des apports gratuits de chaleur tels que par rayonnement solaire, sont souvent momentanément assurés même s'ils sont intermittents. Ces apports gratuits évitent une remise en route du chauffage pendant un court instant, qui est consommatrice d'énergie sans être d'un intérêt réel.

Il faut également noter que, conformément à l'invention, le système de chauffage n'est remis en fonctionnement que lorsque la demande de chaleur est suffisante pour que la puissance de chauffage nécessaire corresponde à la puissance maximale.

Cette limitation du nombre de mises en marche de l'installation de chauffage pendant une période déterminée fait que, si ce procédé est intéressant d'un point de vue économique pour des installations de chauffage électrique, il est également tout à fait adapté à des installations de chauffage par catalyse, qui sont caractérisées par des performances diminuées en période de démarrage, pourvu que chaque démarrage soit accompagné d'une période de suralimentation en gaz.

Selon une caractéristique de ce procédé, la réduction de la puissance est obtenue par réduction du temps d'alimentation de l'installation de chauffage à l'intérieur de cycles constants jusqu'à ce que la puissance moyenne ne soit plus égale qu'à environ la moitié ou le tiers de la puissance maximale pour un appareil à catalyse.

Dans ce même cas, le temps d'alimentation en gaz diminue à l'intérieur de cycles de période constante tout en assurant une alimentation en gaz suffisante pour que les conditions de combustion soient bonnes.

Selon un mode avantageux de mise en oeuvre, ce procédé de régulation consiste à générer un signal de tension en dents de scie, à l'écrêter à l'aide d'un dispositif à diodes, à comparer la température à réguler à une valeur de consigne réglable générée par un potentiomètre, à amplifier l'écart entre la valeur de consigne et la valeur image de la température au-delà d'une limite inférieure, du même ordre que la limite inférieure d'écrêtage de la dent de scie, à comparer à l'aide d'un amplificateur opérationnel la valeur obtenue et la valeur de la dent de scie écrêtée, et en utilisant cet amplificateur comme trigger, à envoyer des impulsions d'arrêt sur un relais destiné à commander la fourniture de puissance à l'installation de chauffage pendant des temps proportionnels à l'écart entre la température ambiante et la température de consigne.

De toute façon, l'invention sera bien comprise à l'aide de la description qui suit en référence au dessin schématique annexé représentant, à titre d'exemples non limitatifs, plusieurs dispositifs pour la mise en oeuvre de ce procédé :

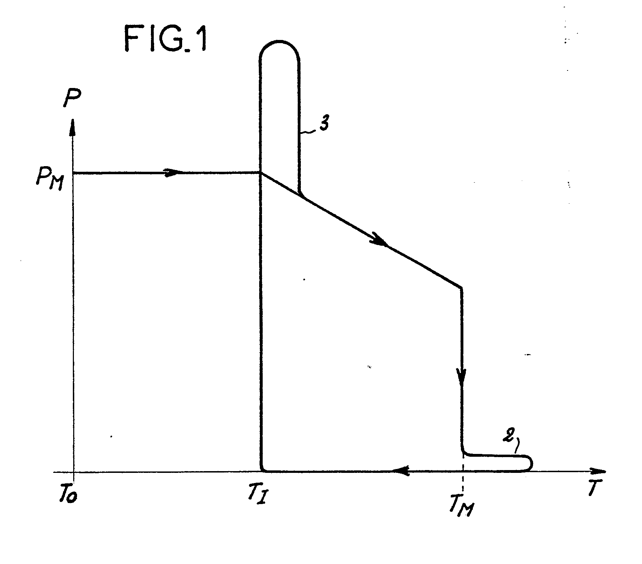

Figure 1 est une vue du cycle de régulation indiquant la puissance fournie en fonction de la température ;

Figure 2 est une vue d'un mode de commande de cette régulation avec suralimentation en période de démarrage ;

Figure 3 est une vue du circuit d'alimentation en gaz d'un appareil de chauffage à catalyse avec dispositif de suralimentation ;

Figures 4 et 5 sont deux vues du circuit électrique de commande d'un appareil de chauffage à catalyse, avec dispositif de suralimentation, mettant en oeuvre un système par tout ou rien ;

Figure 6 et 7 sont deux vues correspondant, respectivement à figure 2 et 3, d'une installation ne comportant pas de dispositif de suralimentation en période de démarrage.

Le procédé conforme à l'invention consiste, partant d'une température $T_0$, à réaliser l'alimentation de l'appareil de chauffage sous une puissance $P_M$.

Lorsque la température atteint une valeur $T_I$, l'alimentation devient modulante, c'est-à-dire que la puissance fournie diminue au fur et à mesure qu'augmente la température, ceci jusqu'à une température $T_M$. La puissance fournie à cette température est environ la moitié ou le tiers de la puissance maximale. Lorsque la température $T_M$ est atteinte, l'appareil de chauffage n'est plus alimenté. Néanmoins, la température dans le local chauffé peut encore augmenter, par exemple conformément à la partie (2) de la courbe, sous l'effet d'un apport calorifique extérieur tel que le rayonnement solaire.

L'appareil de chauffage n'est alors plus alimenté jusqu'à ce que la température atteigne le seuil inférieur fixé $T_I$ permettant une alimentation à la puissance maximale $P_M$. Le cycle recommence de la manière indiquée précédemment avec une phase modulante lors du passage de $T_I$ à $T_M$. Dans le cas d'un appareil de chauffage à catalyse, il est prévu une suralimentation momentanée en gaz lors de l'allumage se traduisant par un pic (3) correspondant à une augmentation de puissance.

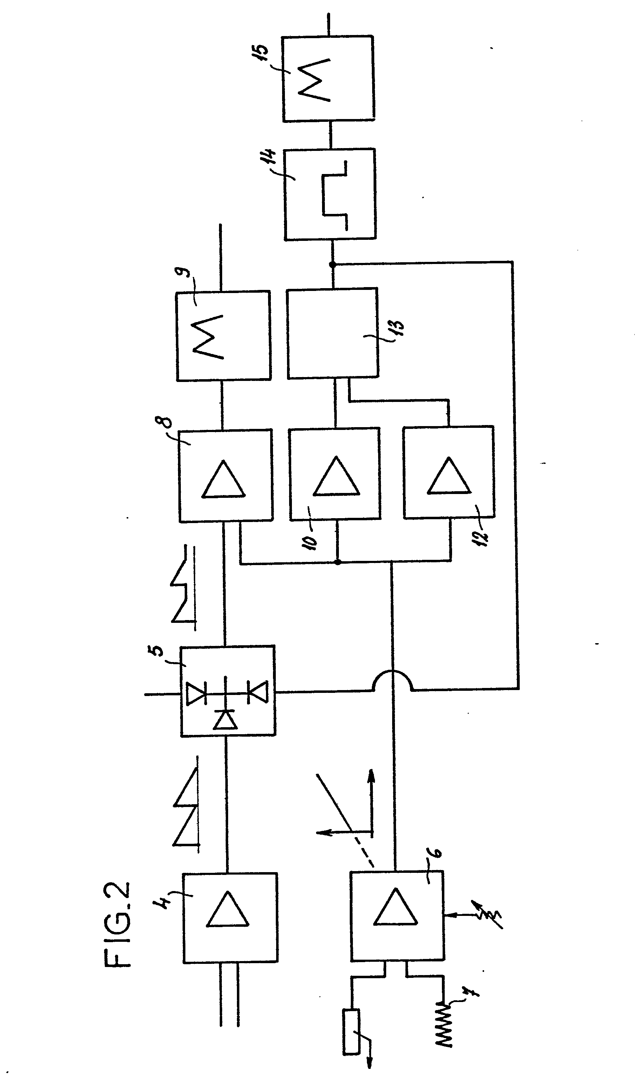

Une telle régulation peut être obtenue à partir du montage de la figure 2. Un générateur (4) procure un signal de tension en dents de scie dont on assure l'écrêtage par un dispositif à diodes (5). La température à réguler, mesurée par une sonde (24), est comparée au moyen d'un dispositif connu, de type amplificateur opérationnel (6) à une valeur de consigne générée par un potentiomètre (7), permettant de régler ladite valeur de consigne. L'écart entre la valeur de consigne et la valeur image de la température est amplifié au-delà d'une limite inférieure, du même ordre que la limite inférieure d'écrêtage de la dent de scie. On compare alors, à l'aide d'un amplificateur opérationnel (8), la valeur obtenue et la valeur de la dent de scie écrêtée, ce qui a pour effet, en utilisant cet amplificateur en tant que trigger, d'envoyer des impulsions d'arrêt sur un relais destiné à commander un électrovanne (9) d'alimentation en gaz de l'appareil de chauffage en régime normal de fonctionnement pendant des temps proportionnels à l'écart entre la valeur de consigne et la température.

La commande du dispositif de suralimentation est réalisée par deux amplificateurs (10) et (12) montés en parallèle avec l'amplificateur opérationnel (8), qui arme une mémoire (13) destinée à inhiber la dent de scie lorsque la température est supérieure à la température de consigne, et à mettre en route le dispositif de suralimentation (14) assuré par un trigger mono-coup ouvrant pendant une durée limitée l'électrovanne (15) de suralimentation lorsque la température redevient inférieure à la température de consigne.

Lorsque la température dépassera la valeur maximale $T_M$, l'amplificateur (12) mettra la mémoire (13) à zéro, ce qui aura pour but d'inhiber le fonctionnement de la dent de scie.

Lorsque la température redescendra en dessous de la température minimale $T_I$, l'amplificateur (10) viendra rebasculer la mémoire (13), ce qui aura pour effet de remettre en route le dispositif de suralimentation (14) et de supprimer la partie inhibitrice de la dent de scie.

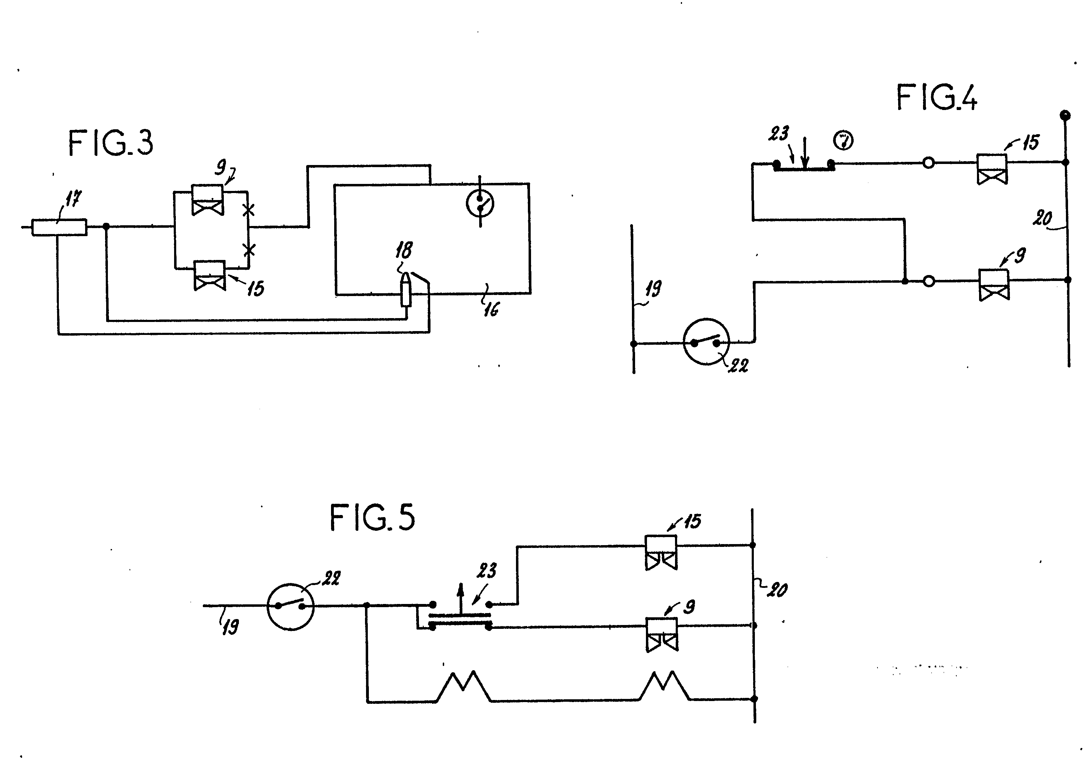

La figure 3 représente schématiquement l'alimentation en gaz d'un panneau catalytique (16). Une électrovanne de sécurité (17) est disposée sur le circuit d'alimentation en gaz, qui est commandée par un thermocouple soumis au

6

rayonnement d'une veilleuse (18) de sécurité qui peut, éventuellement, servir également de contrôle d'atmosphère. Les électrovannes, respectivement (9) et (15), de régime normal de fonctionnement et de suralimentation sont disposées en aval de la vanne de sécurité.

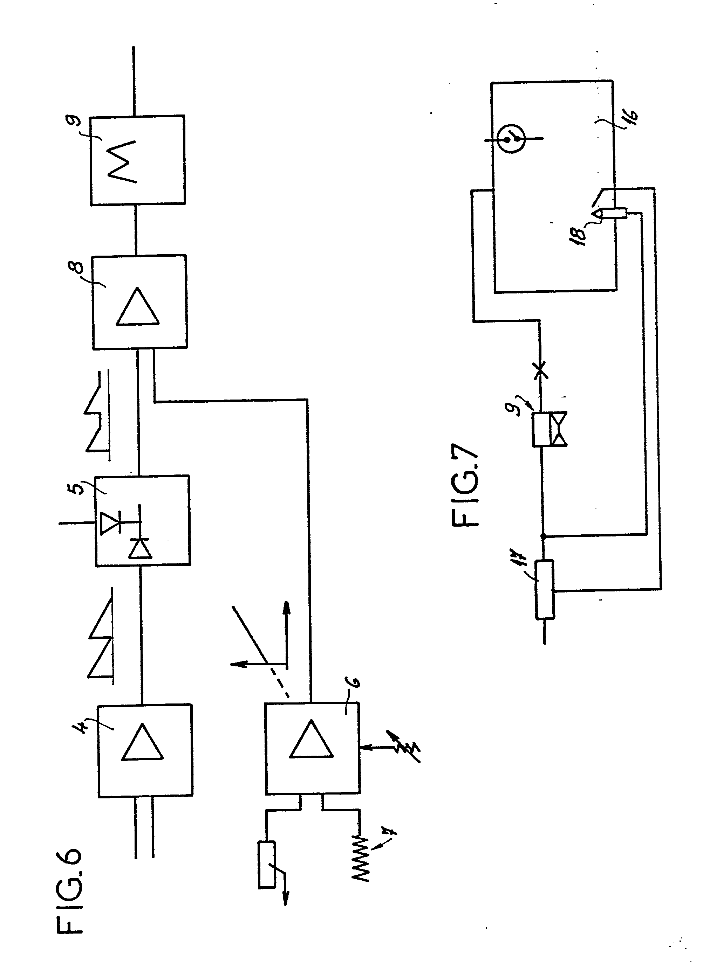

Les figures 4 et 5 représentent un circuit électrique de commande d'un appareil de chauffage par catalyse dans le cas d'un fonctionnement par tout ou rien. Dans ce cas, il est prévu entre les lignes de phase (19) et neutre (20) un thermostat (22) en aval duquel sont disposées en parallèle les électrovannes, respectivement (9) et (15). Un contact à ouverture retardée (23), qui peut être actionné soit par un effet thermique, soit par un temporisateur, assure l'ouverture de l'électrovanne (15) de suralimentation, en période d'allumage de l'appareil.

Les figures 6 et 7 correspondent aux agencements décrits aux figures 2 et 3 respectivement, à la différence près qu'elles ne comportent pas de système de suralimentation en période d'allumage, ni de commande de celui-ci. La vanne de suralimentation peut alors soit être supprimée, si elle n'est pas indispensable, soit encore le dispositif de commande, sans dispositif de suralimentation, sera monté en lieu et place du thermostat (22).

## - REVENDICATIONS -

1. - Procédé de régulation d'une installation de chauffage, caractérisé en ce qu'il consiste à utiliser, à partir d'un seuil inférieur de température, une marche modulante, c'est-à-dire à fournir une puissance moyenne qui décroît au fur et à mesure que la température augmente, à stopper le chauffage lorsque la température atteint une valeur prédéterminée, et à ne réalimenter l'installation que lorsque la température réatteint la valeur inférieure de la plage correspondant à la marche modulante.

2. - Procédé de régulation selon la revendication 1, caractérisé en ce que la décroissance de la puissance est obtenue par réduction du temps d'alimentation de l'installation de chauffage à l'intérieur de cycles constants jusqu'à ce que la puissance moyenne ne soit plus égale qu'à environ la moitié ou le tiers de la puissance maximale.

3. - Procédé de régulation selon l'une quelconque des revendications 1 et 2, caractérisé en ce qu'il consiste à générer un signal de tension en dents de scie, à l'écrêter à l'aide d'un dispositif à diodes (5), à comparer la température à réguler, mesurée par une sonde (24), à une valeur de consigne réglable générée par un potentiomètre (7), à amplifier l'écart entre la valeur de consigne et la valeur image de la température au-delà d'une limite inférieure, du même ordre que la limite inférieure d'écrêtage de la dent de scie, à comparer à l'aide d'un amplificateur opérationnel (8) la valeur obtenue et la valeur de la dent de scie écrêtée, et en utilisant cet amplificateur comme trigger, à envoyer des impulsions d'arrêt sur un relais destiné à commander la fourniture de puissance à l'installation de chauffage pendant des temps proportionnels à l'écart entre la température ambiante et la température de consigne.

4. - Dispositif pour la mise en oeuvre du procédé selon l'une quelconque des revendications 1 à 3, dans le cas de son application à une installation de chauffage au gaz par catalyse, caractérisé en ce qu'il comprend une tubulure d'amenée de gaz sur laquelle est montée une électrovanne de sécurité (17), actionnée par un thermo-couple associé à une veilleuse de sécurité (18) et en aval de laquelle est montée une électrovanne (9) qui, assurant l'alimentation du panneau catalytique en conditions normales de fonctionnement, est commandée directement pour assurer la modulation de la fourniture de puissance moyenne à l'installation.

5. - Dispositif pour la mise en oeuvre du procédé selon l'une quelconque des revendications 1 à 3, dans le cas de son application à une installation de chauffage au gaz par catalyse, caractérisé en ce qu'il comprend un circuit de gaz comprenant une tubulure d'amenée de gaz sur laquelle est montée une électrovanne de sécurité (17) actionnée par un thermocouple associé à une veilleuse de sécurité (18) et en aval de laquelle sont montées en parallèle deux électrovannes (9, 15) assurant l'alimentation du panneau catalytique, respectivement en conditions normales de fonctionnement et en période de suralimentation au démarrage.

6. - Dispositif selon l'ensemble des revendications 3 et 5, caractérisé en ce que le relais recevant les impulsions de l'amplificateur opérationnel (8) agit, par l'intermédiaire d'un relais, sur l'électrovanne (9) d'alimentation en gaz en régime de marche normal, l'installation comprenant, en outre, deux amplificateurs (10, 12) qui, montés en parallèle par rapport à l'amplificateur opérationnel, sont destinés à armer une mémoire (13) qui viendra inhiber la dent de scie lorsque la température ambiante est supérieure à la température de consigne, et mettre en route le dispositif de suralimentation (14) assuré par un trigger mono-coup, qui ouvrira l'électrovanne de suralimentation en gaz quand la température redeviendra inférieure à la température de consigne, l'un (10) des deux amplificateurs mettant la mémoire à zéro, ce qui a pour effet d'inhiber le fonctionnement de la dent de scie quand la température dépasse la température maximale réglée, et l'autre amplificateur (12) rebasculant la mémoire, ce qui

9

a pour effet de remettre en marche le dispositif de suralimentation (14) et de supprimer la partie inhibitrice de la dent de scie lorsque la température redescend au-dessous de la température minimale.

7. - Dispositif selon la revendication 5, caractérisé en ce que, dans le cas d'une alimentation par tout ou rien, le circuit électrique de commande comprend un thermostat de régulation (22) en aval duquel sont montées en parallèle l'électrovanne (9) d'alimentation en régime normal et l'électrovanne (15) de suralimentation, un contact (23) à ouverture retardée étant prévu pour assurer l'ouverture de l'électrovanne (15) de suralimentation en période d'allu-mage.

FIG.1

0069028

FIG.2

FIG.3

FIG.4

FIG.5

0069028

FIG.6

FIG.7

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 381 255 (VAILLANT) *Page 1, lignes 4-17; page 3, ligne 38 - page 4, ligne 16; page 9, ligne 20 - page 10, ligne 20; figures 2,8,11* | 1-3 | G 05 D 23/19 F 23 N 1/00 |
| A | FR-A-2 311 449 (JOHNSON) *Page 3, ligne 22 - page 4, ligne 8; page 9, ligne 11 - page 13, ligne 14; figure 1* | 1-3 | |
| A | FR-A-2 353 803 (OTTO JUNKER) *Page 6, lignes 1-20; figure 1* | | |
| A | FR-A-2 447 574 (HONEYWELL) *Page 5, ligne 34 - page 9, ligne 33; figure 2* | | |

DOMAINES TECHNIQUES RECHERCHES (Int. Cl. ³)

G 05 D
F 23 N

Le présent rapport de recherche a été établi pour toutes les revendications

| Lieu de la recherche | Date d'achèvement de la recherche | Examinateur |
|---|---|---|
| LA HAYE | 08-09-1982 | HELOT H.V. |